# EUROPEAN PATENT APPLICATION

(11) **EP 2 913 977 A2**
(43) Date of publication of application: **02.09.2015**
(21) Application number: 13807211.1
(22) Date of filing: 21.08.2013
(51) Int. Cl.: H04L 29/08

(54) **RESOURCE INFORMATION ACQUISITION METHOD, SYSTEM AND DEVICE FOR INTERNET OF THINGS TERMINAL DEVICE**

(30) Priority: 26.10.2012 CN 201210417115
(71) Applicant: ZTE Corporation, Shenzhen, Guangdong 518057 (CN)
(72) Inventor: FAN, Xianyou, Shenzhen Guangdong 518057 (CN)
(74) Representative: D'Halleweyn, Nele Veerle Trees Gertrudis
(86) International application number: PCT/CN2013/081918
(87) International publication number: WO 2013/189394

(57) **Abstract**

A resource information acquisition method, system, terminal device and access device for an Internet of Things terminal device, including: a terminal device receiving a request message sent by an access device for acquiring resource information, the request message includes at least parameters M and N, indicating that the access device needs to acquire N pieces of resource information after resource information M and adjacent to the M; according to the request message, the terminal device sending the access device the N pieces of resource information after the resource information M and adjacent to the M. The technical scheme in accordance with the embodiment of the present invention can be used to flexibly manage an Internet of Things terminal device through a Restful style interface, and is particularly suitable for traversing resources of the terminal device, thereby improving the access efficiency and reducing the network payloads.

## Description

### Technical Field

The present invention relates to the field of communication technologies, and more particularly, to a resource information acquisition method, system, terminal device and access device of an Internet of things terminal device.

### Background of the Invention

The term, "Internet of Things", comes from the English wording, "Internet of Things, IoT", namely: an Internet connecting things. Currently, a more popular definition of the Internet of Things is: using sensing elements such as a radio frequency identifier, a sensor, or two-dimensional codes to achieve network interconnection between things, or between persons and things through a basic network, and is a network allowing any person or thing use any means to access and interact with any service at any time and anywhere.

The Internet of Things aggregates a large number of intelligent things, and in order to achieve access to things and a good interoperability between the things, IP (Internet Protocol) based smart things are a big trend. However, these intelligent things usually only have weak computing power, and are very sensitive to resource consumption. Currently the protocols used in the Internet are too complicated, the payloads are large, and they are difficult to meet the needs of application scenarios of the Internet of Things. In addition, the Internet of things needs to access a vast amount of heterogeneous terminal devices, and needs a universal, simple and flexible method.

Using the Restful mode as an access interface has been widely accepted and promoted in the field of Internet of things. The ETSI M2M (European Telecommunications Standards Institute) selected the Restful as the standard of access interface, the IETF (Internet Engineering Task Force) has specifically established the CoRE (Constrained Restful Environments) working group dedicated to the research on application protocols suitable for constrained environments, namely CoAP (Constrained Application Protocol), and the first RFC document RFC 6690: Constrained RESTful Environments (CoRE) Link Format has been published. The feature of CoAP is: based on the UDP, the message uses the binary form, whose format is compact, and it needs relatively small terminal payloads, has the Restful style access interface, and can be seen as a streamline of the Hypertext Transfer Protocol (HTTP).

However, there still exist some shortcomings when the Restful style interfaces are applied to the management of Internet of Things devices:
the access device may often require to list some or all of the resources of the terminal device, take the information of adjacent nodes of a sensing node for example, the information of each adjacent node will be abstracted to a single resource, and when the Restful mode is used to view all adjacent information of a certain node, it needs to acquire a list of identifications of all the "adjacent node information" resources, and then access the resources one by one based on the identifications, and only a specific resource can be accessed at a time, thus the access efficiency is not high; in addition, the identification and content are actually divided into two acquisitions, which also increases the network payloads to a certain extent.

### Summary of the Invention

To solve the technical problem, the embodiment of the present invention is to provide a resource information acquisition method, system, terminal device and access device for an Internet of Things terminal device, to solve the problem in the related art that the access efficiency is not high because the identification list of the resources should be acquired first and then the resources are accessed one by one.

To solve the abovementioned technical problem, in one aspect, the embodiment of the present invention provides a resource information acquisition method for an Internet of Things terminal device, comprising:
a terminal device receiving a request message sent by an access device for acquiring resource information, wherein the request message comprises at least parameters M and N, indicating that the access device needs to acquire N pieces of resource information after resource information M and adjacent to the M;
the terminal device sending the N pieces of resource information after the resource information M and adjacent to the M to the access device according to the request message.

Alternatively, after the terminal device receives the request message, further comprising:
judging whether the number of pieces of resource information after the resource information M and adjacent to the M of the terminal device is less than N or not, if yes, sending all the resource information after the resource information M and adjacent to the M of the terminal device, and informing the access device that the request message processing ends.

Alternatively, the message sent by the terminal device to the access device comprises the identification of each piece of resource information, or the identification and data content of each piece of resource information.

In another aspect, the embodiment of the present invention further provides a resource information acquisition system for an Internet of Things terminal device, comprising:
an access device, configured to send a request message for acquiring resource information, the request information comprises at least parameters M and N, indicating that the access device needs to acquire N pieces of resource information after the resource information M and adjacent to the M;
a terminal device, configured to receive the request information, and send the access device the N pieces of resource information after the resource information M and adjacent to the M according to the request information.

Alternatively, the terminal device is further configured to, after receiving the request message, judge whether the number of pieces of resource information after the resource information M and adjacent to the M of the terminal device is less than N or not, and if yes, send all the resource information after the resource information M and adjacent to the M of the terminal device, and inform the access device that the request message processing ends.

Alternatively, the message sent by the terminal device to the access device comprises the identification of each piece of resource information, or the identification and data content of each piece of resource information.

In still another aspect, the embodiment of the present invention further provides a terminal device, which is configured to receive a request message sent by an access device for acquiring resource information, and send the access device N pieces of resource information after resource information M and adjacent to the M according to the request message.

Alternatively, the terminal device is further configured to, after receiving the request message, judge whether the number of pieces of resource information after the resource information M and adjacent to the M of the terminal device is less than N or not, and if yes, send all the resource information after the resource information M and adjacent to the M of the terminal device, and inform the access device that the request message processing ends.

Alternatively, the message sent by the terminal device to the access device comprises the identification of each piece of resource message, or the identification and data content of each piece of resource information.

In a further aspect, the embodiment of the present invention further provides an access device, configured to send a request message to the terminal device for acquiring resource information, and the request message comprises at least parameters M and N, representing that the access device needs to acquire N pieces of resource information after the resource information M and adjacent to the M.

The beneficial effects of the embodiment of the present invention are as follows:
using the technical scheme of the embodiment of the present invention can flexibly manage an Internet of Things terminal device through a Restful style interface, which is particularly suitable for traversing resources of the terminal device, and can improves the access efficiency and reduce the network payloads.

### Brief Description of the Drawings

FIG. 1 is a flow chart of a resource information acquisition method for an Internet of Things terminal device in an embodiment of the present invention;
FIG. 2 is a schematic diagram of a resource information acquisition system for an Internet of Things terminal device acquiring adjacent resources through a CoAP extended option in an embodiment of the present invention;
FIG. 3 is a schematic diagram of a resource information acquisition system for the Internet of Things terminal device acquiring adjacent resources through the CoAP extended parameter in an embodiment of the present invention.

### Preferred Embodiments of the Invention

Hereinafter, in conjunction with the accompanying drawings and embodiments, the embodiments of the present invention will be described in detail. It should be noted that, the specific embodiments described herein are only used for explaining but not limiting the embodiments of the present invention.

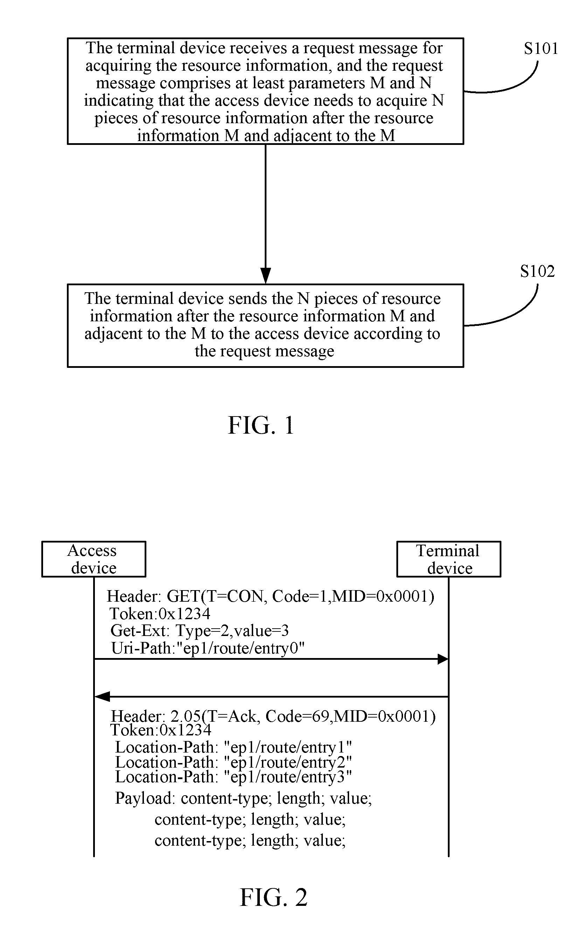

FIG. 1 shows a resource information acquisition method for an Internet of Things terminal device in an embodiment of the present invention, comprising:
in step S101, the access device sends a request message for acquiring the resource information, and the request message comprises at least parameters M and N, representing that the access device needs to acquire N pieces of resource information after the resource information M and adjacent to the M; and the request message further comprises information of an identification or an identification as well as content which the terminal device expects to be returned.

The order of interrupting resource information on the device is an internal organizational logic (order) in the access device, and the resource information is not necessarily arranged in chronological order, it may be arranged in chronological order, or in an order configured by the device.

In step S102, the terminal device receives the request message, and sends the N pieces of resource information after the resource information M and adjacent to the M to the access device according to the request message.

In this step, after the terminal device receives the abovementioned access request message, if this kind of request for acquiring adjacent resources is supported, returns identifications or identifications as well as content of one or more requested resources after and adjacent to the target resource (Resource Information M) back to the access device. In addition, before sending, further judges whether the number of pieces of resource information after the resource information M and adjacent to the M of the terminal device is less than N or not, and if yes, sends all the resource information after the resource information M and adjacent to the M of the terminal device, and informs the access device that the request message processing ends (for example, using a specific return encoding or using a specific resource identifier to represent). If the terminal device does not support this adjacent resource acquisition method, it degrades to the normal acquisition operation, and the extended options or parameters are ignored during the processing.

For example, a temperature sensor regularly acquires temperature, and the temperature information acquired at each time is abstracted into a single resource, the access device expects to acquire temperature parameters acquired by the temperature sensor (terminal device) after acquiring the temperature parameter T, but the access device does not know there are how many temperature parameter acquisitions after the temperature sensor acquires the temperature parameter T, nor the identifications (ID) of these temperature parameters, therefore the access device can send a request message to the temperature sensor to request for N temperature parameters adjacent to the T and after acquiring the temperature parameter T. After receiving the message, the temperature sensor judges whether the number of temperature parameters acquired after the temperature parameter T is less than N or not, if yes, sends all the temperature parameters acquired after the temperature parameter T, and informs the access device that the request message processing ends in the message; if no, sends the N temperature parameters acquired after the temperature parameter T and adjacent to the T.

In addition, the embodiment of the present invention further relates to a resource information acquisition system for a Internet of Things terminal device and implementing the abovementioned method, comprising:
an access device, configured to send a request message for acquiring resource information, and the request message comprises at least parameters M and N, representing that the access device needs to acquire N pieces of resource information after the resource information M and adjacent to the M;
a terminal device, configured to receive the request message, and send the N pieces of resource information after the resource information M and adjacent to the M to the access device according to the request message.

The terminal device is further configured to, after receiving the request message, judge whether the number of resource information after the resource information M and adjacent to the M of the terminal device is less than N or not, and if yes, send all the resource information after the resource information M and adjacent to the M of the terminal device, and inform the access device that the request message processing ends; if no, send the N pieces of resource information after the resource information M and adjacent to the M.
the resource information sent by the terminal device to the access device comprises the identification of each piece of resource message, or the identification and data content of each piece of resource information.

Hereinafter, the present invention will be described with two specific embodiments:

### The first embodiment:

as shown in FIG. 2, the present embodiment provides a method for acquiring the adjacent resource information through extended options, and the specific description is as follows.

Table 1 defines the extended options.

**Table 1**

| NO | C/E | Name | Format | Length | Default |
|---|---|---|---|---|---|
| XX | Elective | Get-ext | Uint | 1B | None |

Table 2 defines the meaning of each byte for acquiring the resource information.

**Table 2**

| | | |
|---|---|---|
| 0...3 bit (type) | 4...7 (value) | Remark |

| 0 (reserved) | Reserved | Reserved |
|---|---|---|
| 1 | 0 | Acquire the adjacent resource |
| 2 | 1-7 | Acquire multiple adjacent resources |
| XX | XX | XX |

2. The client end (access device) sends an extended request to the server (terminal device), and the content of the CoAP message is as follows:
   Ver: 1 (current version);
   T: 1 (to be confirmed);
   OC: 3 (the number of options);
   CODE: 1 (GET);
   Message id: 0x0001;
   URI-PATH: "ep1/route/entry0";
   Token: 0x1234;
   Get-Ext: type=2, value=3; (indicate that it expects to acquire three adjacent resources after the ep1/route/entry0).
3 After receiving the CoAP request, the server end returns the identifications and contents of the three resources after the ep1/route/entry0 to the client end, and the message format is as follows:
   Ver: 1 (current version);
   T: 2 (ACK);
   OC: 5 (the number of options);
   CODE: 205 (content);
   Message id: 0x0001;
   Content-Type: mix (if there is only one resource returned, it is the actual type of the resource);
   Token: 0x1234;
   Location-path: "ep1/route/entry1" (occur sequentially according to the order of resources);
   Location-path: "ep1/route/entry2";
   Location-path: "ep1/route/entry3";
   Payloads.

If the client end requests only for one resource, the payloads returned by the server end are packaged according to the normal content-type;
if the client end requests for a plurality of resources, and the server end has more than one resources to be returned, the payloads are packaged according to the content-type, length, value mode, and one-to-one correspond to the order of their appearance in the Location-Path options.

If the number of resource messages to be returned on the server end is less than the number of pieces of resource information requested by the client end, the last Location-path is set to empty as as the end identification to return.

### The second embodiment

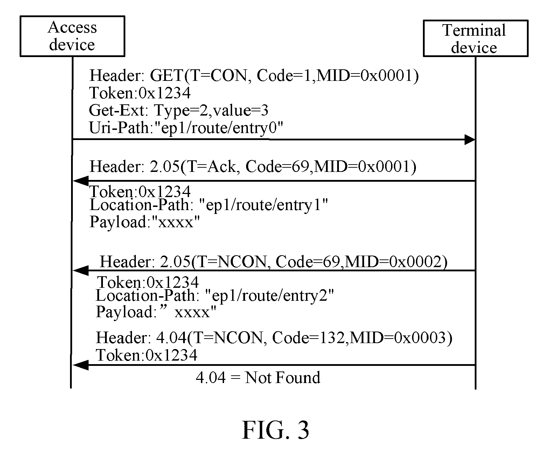

As shown in FIG. 3, the present embodiment provides a method for acquiring adjacent resource information through the extended parameters, and the specific description is as follows:
1, the client sends an extended request to the server end, and the CoAP message content is as follows:
   Ver: 1 (current version);
   T: 1 (to be confirmed);
   OC: 3 (the number of options);
   CODE: 1 (GET);
   Message id: 0x0001;
   URI-PATH: "ep1/route/entry0";
   Token: 0x1234;
   URI-Query: get-next = 3 (indicate that it expects to obtain three adjacent resources after the ep1/route/entry0);
2, after receiving the request, the server end respectively returns the 3 resources to the client end, and at each time of returning one resource, the identification of the resource is indicated in the returned message, and the returned message is as follows:
   Ver: 1 (current version);
   T: 2 (ACK);
   OC: 2 (the number of options);
   CODE: 205 (content);
   Message id: 0x0001;
   Token: 0x1234;
   Content-type: (resource type);
   Location-path: "ep1/route/entry1" (identification corresponding to the resource content in the returned payloads);
   Payloads: "xxxx".
      Different message id is used in each transmission, but if the client end has sent the token option, each return must be consistent with it.
3 If the number of resource messages to be returned on the server end is less than the number of resource messages requested by the client end, after sending the respective resources, the server end sends a message whose code is 132 (4.04 Not Found), indicating that the request has been processed completely, and no other resources can be found:
   Ver: 1 (current version);
   T: 0 (no need to be confirmed);
   OC: 1 (the number of options);
   CODE: 132 (0b10000100, 4.04 not found);
   Message id: 0x0004;
   Token: 0x1234;

The embodiment of the present invention takes the CoAP which is more appropriate for Internet of Things applications as an example to describe the technical solution of the embodiment of the present invention, it is apparent that the described embodiments are merely part of the embodiments of the present invention and are not limited to the CoAP, while other REST-style protocols such as HTTP can be applied. Based on the embodiments of the present invention, all other embodiments obtained by those of ordinary skill in the art on the premise of not making creative work should belong to the claims of the embodiments of the present invention.

The first and second embodiments respectively use the extended option and extended parameter modes to describe the method of the client end initiating a request for acquiring adjacent resources, and also describe two modes of the server end returning a plurality of resources, and the two request methods and the two returning modes can be randomly combined with each other, and are not repeated here.

It can be seen from the abovementioned embodiments that, based on the Restful style, the embodiment of the present invention uses the mode of the client end communicating with the server end, proposes an extended scheme implemented based on the Restful style protocol, and is able to flexibly and conveniently access and manage the constrained network nodes in the Internet of Things. The technical scheme of the embodiment of the present invention can be used to flexibly manage the Internet of Things terminal device, especially suitable for traversing resources of the terminal device, and can improve the access efficiency and reduce the network payloads.

Although the preferred embodiments of the present invention have been disclosed for the purposes of illustration, those skilled in the art will appreciate that various improvements, additions and substitutions are possible, and therefore, the scope of embodiments of the present invention should not be limited to the abovementioned embodiments.

### Industrial Applicability

In the embodiment of the present invention, the link backup and the master device backup can be used to enable the link switch in the event of an abnormality without affecting the time synchronization, thus solving the technical problem of time synchronization failure due to the abnormalities in the prior art, and achieving the technical effect of improving the reliability of time synchronization.

## Claims

1. A resource information acquisition method for an Internet of Things terminal device, comprising:
a terminal device receiving a request message sent by an access device for acquiring resource information, wherein the request message comprises at least parameters M and N indicating that the access device needs to acquire N pieces of resource information after resource information M and adjacent to the M;
the terminal device sending the N pieces of resource information after the resource information M and adjacent to the M to the access device according to the request message.

2. The resource information acquisition method for an Internet of Things terminal device of claim 1, after the terminal device receives the request message, further comprising:
judging whether a number of pieces of resource information after the resource information M and adjacent to the M of the terminal device is less than N or not, if yes, sending all the resource information after the resource information M and adjacent to the M of the terminal device, and informing the access device that processing on the request message ends.

3. The resource information acquisition method for an Internet of Things terminal device of claim 1 or 2, wherein, the message sent by the terminal device to the access device comprises identification of each piece of resource information, or the identification and data content of each piece of resource information.

4. A resource information acquisition system for an Internet of Things terminal device, comprising::
an access device, configured to send a request message for acquiring resource information, wherein the request message comprises at least parameters M and N indicating that the access device needs to acquire N pieces of resource information after resource information M and adjacent to the M;
a terminal device, configured to receive the request information, and send the access device the N pieces of resource information after the resource information M and adjacent to the M according to the request message.

5. The resource information acquisition system for an Internet of Things terminal device of claim 4, wherein,
the terminal device is further configured to, after receiving the request message, judge whether a number of pieces of resource information after the resource information M and adjacent to the M of the terminal device is less than N or not, and if yes, send all the resource information after the resource information M and adjacent to the M of the terminal device, and inform the access device that processing on the request message ends.

6. The resource information acquisition system for an Internet of Things terminal device of claim 4 or 5, wherein, the message sent by the terminal device to the access device comprises identification of each piece of resource information, or the identification and data content of each piece of resource information.

7. A terminal device, configured to receive a request message sent by an access device for acquiring resource information, and send the access device N pieces of resource information after resource information M and adjacent to the M according to the request message.

8. The terminal device of claim 7, wherein, the terminal device is further configured to, after receiving the request message, judge whether a number of pieces of resource information after the resource information M and adjacent to the M of the terminal device is less than N or not, and if yes, send all the resource information after the resource information M and adjacent to the M of the terminal device, and inform the access device that processing on the request message ends.

9. The terminal device of claim 6 or 7, wherein, the message sent by the terminal device to the access device comprises identification of each piece of resource message, or the identification and data content of each piece of resource information.

10. An access device, configured to send a request message to a terminal device for acquiring resource information, and the request message comprises at least parameters M and N indicating that the access device needs to acquire N pieces of resource information after resource information M and adjacent to the M.
